# EUROPÄISCHE PATENTSCHRIFT

(11) **EP 4 051 419 B1**
(45) Veröffentlichungstag und Bekanntmachung des Hinweises auf die Patenterteilung: **04.10.2023**
(21) Anmeldenummer: 20797467.6
(22) Anmeldetag: 26.10.2020
(51) Int. Cl.: B01D 63/02, B01D 63/04, B01D 65/02, B01D 65/08, C02F 3/12, C02F 3/20

(54) **VERFAHREN ZUM EINLEITEN EINES GASES UND BEGASUNGSEINRICHTUNG**
METHOD FOR INTRODUCING A GAS, AND GASSING DEVICE
PROCÉDÉ D'INTRODUCTION D'UN GAZ, ET DISPOSITIF DE GAZAGE

(30) Priorität: 28.10.2019 DE 102019129074
(43) Veröffentlichungstag der Anmeldung: 07.09.2022
(73) Patentinhaber: membion GmbH, 52159 Roetgen (DE)
(72) Erfinder: VOSSENKAUL, Klaus, 52074 Aachen (DE); VOLMERING, Dirk, 52070 Aachen (DE)
(74) Vertreter: Bauer, Dirk
(86) Internationale Anmeldenummer: PCT/EP2020/080069
(87) Internationale Veröffentlichungsnummer: WO 2021/083841

(56) Entgegenhaltungen:
- WO-A1-2008/153818
- WO-A1-2016/064466
- CN-A- 104 084 049
- US-A1- 2009 194 477
- US-A1- 2015 265 973

## Beschreibung

Die Erfindung betrifft zunächst ein Verfahren zum Einleiten eines Gases in eine Flüssigkeit, wobei in aufeinanderfolgenden Pulsen jeweils zunächst ein unterhalb einer Oberfläche der Flüssigkeit angeordnetes und nach unten durch einen Pegel der Flüssigkeit begrenztes Gasvolumen mit dem Gas aufgefüllt wird, wobei das Gas zugleich die Flüssigkeit von oben nach unten aus einem Gasheberkanal verdrängt, bis der Pegel einen Einlassquerschnitt eines Gas-Ausströmkanals unterschreitet, dann das Gas aus dem Gasvolumen in Folge nach unten durch den Gasheberkanal, einen sich an diesen unten anschließenden Umlenkungsbereich, nach oben durch den Einlassquerschnitt und den sich an diesen oben anschließenden Gas-Ausströmkanal zu der Oberfläche strömt, wobei ein Sperrstrom der Flüssigkeit durch einen Kompensationseinlass unterhalb des Gashebereinlasses zu dem Einlassquerschnitt strömt und von dem Gas solange mitgerissen wird bis die Flüssigkeit den Umlenkungsbereich füllt und dadurch den Einlassquerschnitt für das Gas verschließt.

Die Erfindung betrifft weiterhin eine Begasungseinrichtung mit einem nach unten offenen Gas-Sammelraum, der durch eine obere Wandung und eine seitliche Wandung begrenzt wird, einem Gaseinlass zum Einlassen eines Gases in den Gas-Sammelraum, einem Gasheberkanal zum Leerhebern des Gas-Sammelraumes, der oben einen Gashebereinlass im Gas-Sammelraum aufweist, einem Umlenkungsbereich unten an dem Gasheberkanal, einem Einlassquerschnitt oben an dem Umlenkungsbereich, an den oben ein Gas-Ausströmkanal anschließt und einem Kompensationseinlass unterhalb des Gashebereinlasses, der bis zum Einlassquerschnitt durchströmbar ist.

Ein solches Verfahren und eine solche Begasungseinrichtung sind bekannt aus US 2015/0265973 A1, CN104084049 A und CN105854619 A.

Die bekannten Verfahren und die bekannten Begasungseinrichtungen sind konzipiert für den Einsatz zur Begasung von Membranfiltern, wie sie beispielsweise bei Membranbioreaktoren (MBR) anzutreffen sind. Die Begasungseinrichtung wird unterhalb der Membranfilter positioniert und mit einem im Wesentlichen konstanten Luft-Volumenstrom beaufschlagt, der dann pulsweise aus der Begasungseinrichtung ausströmt.

Um eine Verstopfung der Membranen durch abfiltrierte Stoffe zu verhindern, wird die Luft von unten in die Membranfilter eingetragen. Auf dem Weg zur Oberfläche der Flüssigkeit durchströmt das Gas die über der Begasungseinrichtung installierten Membranfilter. Die dadurch generierte Scherkraft der Zweiphasenströmung aus Luft und zu filtrierender Flüssigkeit spült die Membranen.

Beim pulsweisen Austreten der Flüssigkeit entstehen höhere Scherkräfte als bei kontinuierlicher Begasung und gleichzeitig wird eine Kanalbildung der Luft vermieden, d. h. die aufsteigenden Luftblasen müssen sich stets neu formieren und finden dabei immer wieder neue Wege durch den Membranfilter.

Man nennt eine solche Begasungseinrichtung, die konstant mit Luft beaufschlagt wird und diese dann pulsweise wieder auslässt, auch einen Geysir.

Durch den an den Einlassquerschnitt angeschlossenen Gasheberkanal wird das im Gas-Sammelraum angestaute Gasvolumen beim Ausströmen des Gases aus der Begasungseinrichtung über das Prinzip der kommunizierenden Röhren herausgesaugt, so dass sich der Gas-Sammelraum weitestgehend entleert.

Während der Entleerung des Gas-Sammelraums saugt der ausströmende Gas-Volumenstrom nach dem Mammutpumpenprinzip Flüssigkeit durch den Kompensationseinlass und transportiert diese mit durch den Ausströmkanal. Dies hat den Vorteil, dass der Gasvolumenstrom nach Entleerung des Gas-Sammelraums schneller zum Erliegen kommt und damit die Begasungseinrichtung mit höherer Gaszufuhr betrieben werden kann.

Die Gestaltung des Kompensationseinlasses der bekannten Begasungseinrichtung hat jedoch den Nachteil, dass auf der anderen Seite bei geringen Gas-Zufuhr-Volumenströmen, wie sie beispielsweise bei geringen Filtrationsleistungen der Membranfilter zu Energieeinsparzwecken erforderlich sind, der Entleerungsprozess des Gas-Sammelraumes nicht startet, da aufgrund der offenen Verbindung zur Flüssigkeit kein ausreichender Saugeffekt mehr aufgebaut werden kann, der den Gas-Sammelraum leerhebert. In diesem Fall strömt dann die geringe zugeführte Luft ohne zu pulsen durch den Gas-Ausströmkanal, wodurch die Reinigungsleistung der eingetragenen Luft deutlich reduziert wird.

In der bekannten Begasungseinrichtung muss daher ein Kompromiss gefunden werden in der Dimensionierung des Kompensationseinlasses. Dieser Kompromiss führt jedoch dazu, dass der Bereich der Luft-Volumenstrom-Zufuhr begrenzt ist: bei zu geringem Gasvolumenstrom startet die Entleerung des Gas-Sammelraums nicht und bei zu großem Gasvolumenstrom kommt der ausströmende Gasvolumenstrom nicht zum Erliegen. In beiden Fällen bedeutet dies, dass der Geysir aufhört zu pulsieren, wodurch der Spüleffekt für die Membranen deutlich reduziert wird.

Im bekannten Verfahren befindet sich der Kompensationseinlass zu jedem Zeitpunkt des Betriebs in Flüssigkeits-Kommunikation, wodurch die Variation der Gas-Volumenstrom-Zufuhr aufgrund der beschriebenen Effekte beschränkt ist.

Nun werden Membranbioreaktoren, insbesondere im Bereich kommunaler biologischer Kläranlagen, häufig mit stark wechselndem Durchsatz betrieben, der je nach Abwasserzulauf zur Kläranlage bei Regen- oder Trockenwetter großen Schwankungen unterliegen kann. Dabei ist zu berücksichtigen, dass ein wesentlicher wirtschaftlicher Aspekt beim Betrieb von Membranbioreaktoren deren Energiebedarf für die Belüftung der Membranmodule ist. Prinzipiell ist der Bedarf an Spül-Luft für die Membranmodule abhängig von deren Durchsatz, da mit steigendem Durchsatz auch die Menge der von den Membranen zurückgehaltenen Feststoffe und damit der Spülaufwand der Membranfilter steigen.

Aus energetischer und damit auch aus wirtschaftlicher Sicht ist es daher erstrebenswert, die Menge der eingetragenen Spül-Luft an den Durchsatz der Membranfilter variabel anpassen zu können.

Hier zeigt sich eine Begrenzung der bekannten Begasungseinrichtung, da diese nur in einem eingeschränkten Variationsbereich des zugeführten Gas-Volumenstroms derart betrieben werden kann, dass sie stabil pulsiert.

Im Hintergrund der Erfindung beschreiben WO 2016/064466 A (Koch Membrane Systems), US 2009/0194477 A1 (Asahi Kasai), US 10,179,311 B2 (Sumitomo Electric), CN104519984B B (Samsung Cheil Industries), KR20190002717 A (Mitsubishi Chemical) und WO 2011/028341 A1 (Zenon Technology Partnership) Begasungseinrichtungen, die keinen Kompensationseinlass aufweisen und daher nur mit relativ geringer Gasvolumen-Zufuhr pulsierend betrieben werden können.

### Aufgabe

Es ist die Aufgabe der vorliegenden Erfindung, eine Begasungseinrichtung vorzuschlagen, die in einem weiten Variationsbereich der Gasvolumenstrom-Zufuhr stabil pulsiert.

### Lösung

Ausgehend von dem bekannten Verfahren wird nach der Erfindung vorgeschlagen, dass nachdem der Pegel den Einlassquerschnitt unterschritten hat, zunächst allein das Gas durch den Gas-Ausströmkanal strömt, bis der Pegel den Kompensationseinlass übersteigt, und erst dann der Sperrstrom durch den Kompensationseinlass zu dem Einlassquerschnitt strömt.

Das bedeutet, dass sich bei dem erfindungsgemäßen Verfahren zu Beginn der Gasströmung durch den Gas-Ausströmkanal der Kompensationseinlass in Gas-Kommunikation befindet, d.h. er befindet sich im mit Gas gefüllten Gas-Sammelraum. Dadurch wird gewährleistet, dass auch bei extrem geringen Gaszufuhr-Volumenströmen die Entleerung des Gasvolumens sicher startet, da kein Flüssigkeitsstrom den Gassaugeffekt und damit das Leerhebern des Gasvolumens behindert.

Bei dem erfindungsgemäßen Verfahren steigt der Pegel in der Begasungseinrichtung während der Entleerung des Gasvolumens wieder an, wobei das Gasvolumen durch von unten nachströmende Flüssigkeit verdrängt wird. Dabei übersteigt der Pegel irgendwann auch den Kompensationseinlass und bringt diesen in Flüssigkeits-Kommunikation. Von dem Moment an bewirkt der Saugeffekt des in dem Ausströmkanal aufsteigenden Gases, dass ein Sperrstrom der Flüssigkeit durch den Kompensationseinlass angesaugt wird und zu dem Einlassquerschnitt strömt. Dieser Sperrstrom der Flüssigkeit wird so lange von dem Gas mitgerissen, bis die Flüssigkeit den Umlenkungsbereich füllt und somit den Einlassquerschnitt füllt und somit wie ein Ventil für das Gas verschließt.

Damit wird bei dem erfindungsgemäßen Verfahren sichergestellt, dass zum Zeitpunkt des weitgehend leergesaugten Gasvolumens auch bei hoher Gasvolumenstrom-Zufuhr die Ausströmung des Gases unterbrochen wird und das Gasvolumen wieder aufgefüllt werden kann. Damit wird das Pulsieren des Gases auch bei hoher Gasvolumenstrom-Zufuhr gesichert.

Das erfindungsgemäße Verfahren kommt vorteilhafter Weise zum Einsatz bei einem Verfahren zur Filtration einer Flüssigkeit in einem in die Flüssigkeit getauchten Membranfilter mit Membranen, wobei zum Reinigen der Membranen das Gas unten in den Membranfilter eingeleitet wird, und gemäß dem vorgenannten Verfahren den Ausströmkanal durchströmt und danach in den Membranfilter eingeleitet wird.

Dabei hat das erfindungsgemäße Verfahren den Vorteil, dass die weitgehend konstante Gasvolumenstrom-Zufuhr in einem weiten Bereich variiert werden kann und stabil pulsierend in den Membranfilter eingeleitet wird. Damit kann der pulsierende Gasvolumenstrom durch den Membranfilter über einen weiten Bereich der Filtrationsleistungs-Variation energiesparend an die jeweilige Filtrationsleistung angepasst werden.

Die Kombination der erfindungsgemäßen Begasungseinrichtung mit einem darüber installierten Membranfilter hat den Vorteil, dass der Membranfilter bei variabler Filtrationsleistung auch mit variabler Gasvolumenstrom-Zufuhr sicher pulsierend betrieben werden kann und dadurch eine effektive Spülung der Membranen bei niedrigem Energiebedarf realisiert werden kann.

Ausgehend von der bekannten Begasungseinrichtung wird nach der Erfindung vorgeschlagen, dass der Kompensationseinlass auf Höhe des Einlassquerschnittes oder darüber liegt.

Der Kompensationseinlass liegt somit unterhalb der oberen Wandung und oberhalb bzw. auf gleicher Höhe des Einlassquerschnittes. Damit befindet sich der Kompensationseinlass bei mit Gas gefülltem Gas-Sammelraum in Gas-Kommunikation und bei entleertem Gas-Sammelraum in Flüssigkeitskommunikation. Die hat die oben beschriebenen Vorteile für den Start- und Stopp-Vorgang des Geysir-Prozesses der pulsierenden Entleerung und wieder Befüllung des Gas-Sammelraumes.

In einer einfachen Ausgestaltung der erfindungsgemäßen Begasungseinrichtung mündet der Kompensationseinlass in den Gasheberkanal. Da die Flüssigkeit in diesem Fall unmittelbar in den hohen abwärtsströmenden Gas-Volumenstrom in dem Gasheberkanal eingeleitet wird, ist der Mitreißeffekt durch das Gas vergleichsweise hoch, wodurch die Steigerung der Gas-Volumenstrom-Zufuhr begrenzt ist. Diesem Effekt kann dadurch entgegengewirkt werden, dass der Kompensationseinlass vergrößert wird, was jedoch zu einer Einschränkung der Gas-Volumenstrom-Zufuhr nach unten führt, da dann ggf. das Gasvolumen oberhalb des Kompensationseinlasses nicht leergesaugt wird.

In einer weiteren Ausgestaltung der erfindungsgemäßen Begasungseinrichtung schließt sich an den Kompensationseinlass in Richtung des Umlenkungsbereiches ein Kompensationskanal an. Durch diesen werden die Position des Kompensationseinlasses und die Stelle der Einleitung des Flüssigkeitssperrstromes in den ausströmenden Gasstrom entkoppelt, was zu einer Erweiterung der Variation der Gas-Volumenstrom-Zufuhr führt.

In einer vorteilhaften Ausgestaltung einer solchen Begasungseinrichtung mündet der Kompensationskanal parallel zum Gasheberkanal in den Umlenkungsbereich. Dadurch wird die Stelle des Einleitens des Sperrflüssigkeitsstromes weitest möglich nach unten verlegt. Dies hat den Vorteil, dass die Flüssigkeit separat von dem Gasvolumenstrom genau an der Stelle zugeführt wird, an der sie die Sperrwirkung für das Gas erzeugen soll, was einen Stopp des Gas-Ausströmens auch bei höherer Gasvolumenstrom-Zufuhr gewährleistet.

Noch weiter gesteigert werden kann die Gas-Volumenstrom-Zufuhr bei gleichzeitig sicherer Aufrechterhaltung der Pulsation durch eine alternative Ausgestaltung der erfindungsgemäßen Begasungseinrichtung dadurch, dass bei paralleler Anbindung des Kompensationskanals zum Gasheberkanal an den Umlenkungsbereich ein Querschnitt des Kompensationseinlasses größer ist als ein minimaler Querschnitt des Kompensationskanals. Dadurch wird der Sperrstrom der Flüssigkeit erhöht und es kommt auch bei höherer Gasvolumenstrom-Zufuhr zu einem schnelleren und damit sichereren Verschließen des Einlassquerschnittes für das Gas.

Zum Umfang der Erfindung zählt weiterhin ein Membranfilter mit Membranen und einer unterhalb der Membranen angeordneten erfindungsgemäßen Begasungseinrichtung, die entsprechend der vorgenannten Merkmale gestaltet ist.

Der Membranfilter kann dabei mit verschiedenen Arten von Membranen bestückt sein, wie z. B. Hohlfasermembranen, Plattenmembranen, Kissenmembranen oder zu Vorhängen verbundenen Hohlfasermembranen. Die Membranen gehören bevorzugt zu dem Bereich der Ultra- oder Mikrofiltrationsmembranen mit Porengrößen zwischen 0,02 und 1µm. Es können jedoch auch andere Membranen aus dem Bereich der Nanofiltration oder Niederdruck-Umkehrosmose eingesetzt werden.

In einer weiteren Ausgestaltung des Membranfilters mit einer darunter installierten erfindungsgemäßen Begasungseinrichtung weist der Membranfilter ein Gehäuse auf, das die Membranen seitlich umgibt und das oben an die Begasungseinrichtung anschließt, wobei die Begasungseinrichtung einen Flüssigkeits-Strömungskanal aufweist, der den Gassammelraum vertikal durchdringt, zum Einlassen von Flüssigkeit unten in den Membranfilter.

Vorteil dieser Ausgestaltung des Membranfilters mit erfindungsgemäßer Begasungseinrichtung ist es, dass das in den Membranfilter eingetragene Gas diesen aufgrund des seitlich die Membranen umgebenden Gehäuses nicht verlassen kann und somit effektiv zur Spülung der Membranen genutzt wird. Da während der Spülung der Membranen mit dem Gas gleichzeitig auch das Flüssigkeitsvolumen innerhalb des Membranfilters ausgetauscht werden muss, um ein Aufkonzentrieren der von den Membranen zurückgehaltenen Stoffe im Membranfilter zu verhindern, weist die Begasungseinrichtung einen Flüssigkeits-Strömungskanal auf, der den Gassammelraum vertikal durchdringt, zum Einlassen von Flüssigkeit unten in den Membranfilter.

In einer vorteilhaften Ausgestaltung der erfindungsgemäßen Begasungseinrichtung kombiniert mit einem darüber installierten Membranfilter ist das Gehäuse des Membranfilters als Rohr ausgestaltet. Ein solches Rohr kann einen runden, rechteckigen oder beliebig gestalteten Querschnitt aufweisen. Vorteil des Rohres ist dessen preiswerte Fertigung beispielsweise über Extrusionsverfahren.

Um die aus der Begasungseinrichtung in den Membranfilter eingetragene Luft optimal in diesem zu verteilen, weist eine Ausgestaltung der erfindungsgemäßen Begasungseinrichtung kombiniert mit einem darüber installierten Membranfilter einen Gasverteiler unterhalb der Membranen auf, in den der Ausströmkanal mündet.

Es gehört zum Umfang der erfindungsgemäßen Begasungseinrichtung, dass die Strömungskanäle teilweise oder komplett durch Wandungen eines Gehäuses der Begasungseinrichtung gebildet werden. Zu diesen Strömungskanälen zählen der Ausströmkanal, der Gasheberkanal, Kompensationskanal sowie auch der Umlenkungsbereich.

Bei der Ausgestaltung der erfindungsgemäßen Begasungseinrichtung kann der Gaseinlass verschieden gestaltet sein. In einer ersten Ausführungsform ist er als separierter Teil der Begasungseinrichtung unterhalb des Gas-Sammelraumes montiert. In weiteren Aufführungsformen durchdringt der Gaseinlass die obere Wandung oder die seitliche Wandung des Gas-Sammelraumes und mündet in diesem als mit der Wandung verbundener Teil der Begasungseinrichtung.

Die erfindungsgemäße Begasungseinheit kann alternativ auch zur pulsweisen Begasung von irgendwelchen anderen Flüssigkeiten eingesetzt werden.

### Ausführungsbeispiele

Die Erfindung wird nachfolgend anhand von Ausführungsbeispielen erläutert. Es zeigen
- Fig. 1a bis i: die Prozess-Schritte eines ersten erfindungsgemäßen Verfahrens in einer ersten erfindungsgemäßen Begasungseinrichtung dargestellt als Schnittbilder und
- Fig. 2 bis 6: Schnitte weiterer erfindungsgemäße Begasungseinrichtungen.

Die in den Figuren dargestellten Zeichnungen sind nicht maßstäblich. Alle nicht angegebenen Details der im Folgenden beschriebenen erfindungsgemäßen Verfahren oder Begasungseinrichtungen sind identisch mit den Ausführungen bereits zuvor beschriebener erfindungsgemäßer Begasungseinrichtungen.

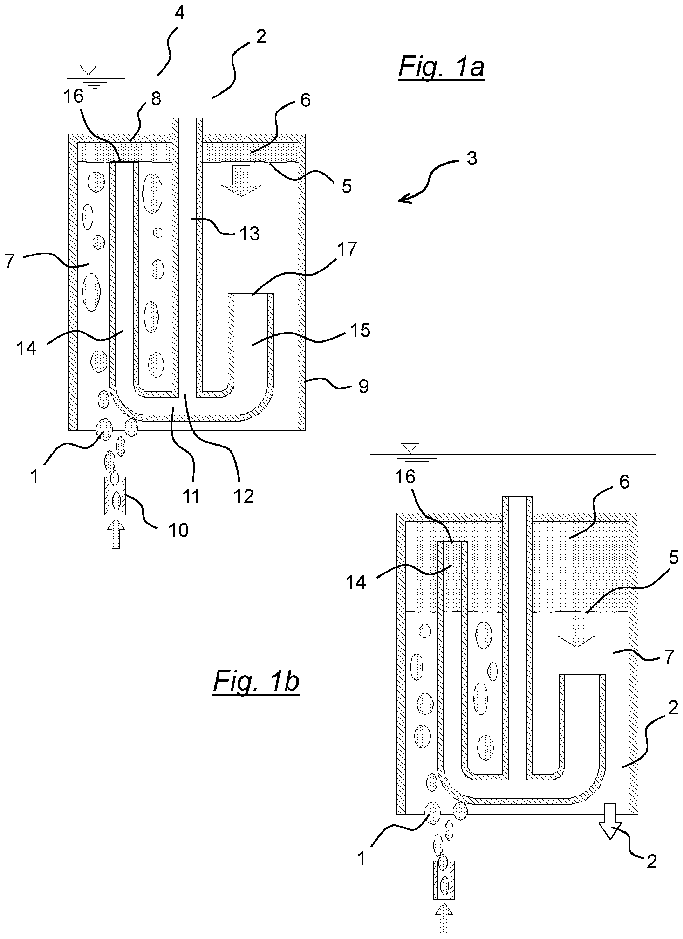

Die Figur 1a zeigt die Prozess-Schritte eines ersten erfindungsgemäßen Verfahrens zum Einleiten eines Gases 1 in eine Flüssigkeit 2 mit Hilfe einer ersten erfindungsgemäßen Begasungseinrichtung 3 dargestellt als Schnittbilder.

Die Begasungseinrichtung 3 beinhaltet ein unterhalb einer Oberfläche 4 der Flüssigkeit 2 angeordnetes und nach unten durch einen Pegel 5 der Flüssigkeit 2 begrenztes Gasvolumen 6. Dieses befindet sich in einem Gas-Sammelraum 7, der durch eine obere Wandung 8 und seitliche Wandung 9 begrenzt wird. Über einen unterhalb des Gas-Sammelraums 7 installierten und von diesem separierten Gaseinlass 10 wird das Gas 1 in den Gas-Sammelraum 7 eingeleitet und füllt dabei das Gasvolumen 6 auf, wodurch der Pegel 5 der Flüssigkeit 2 absinkt. Dabei wird die zu diesem Zeitpunkt in dem Gas-Sammelraum 7 befindliche Flüssigkeit 2 sukzessive durch das einströmende Gas 1 nach unten verdrängt und durch das Gas 1 ersetzt.

Die erste erfindungsgemäße Begasungseinrichtung weist zudem einen Umlenkungsbereich 11 auf, der oben einen Einlassquerschnitt 12 aufweist, an den sich oben ein Gas-Ausströmkanal 13 anschließt. In den Umlenkungsbereich 11 münden ein Gasheberkanal 14 und ein Kompensationskanal 15. Der Gasheberkanal 14 hat oben im Gas-Sammelraum 7 einen offenen Gashebereinlass 16 und der Kompensationskanal 15 hat oben, unterhalb der oberen Wandung 8 im Gas-Sammelraum 7 einen Kompensationseinlass 17, wobei der Querschnitt des Kompensationseinlasses 17 größer dimensioniert ist als der minimale Querschnitt des Kompensationskanals 15. Zudem durchdringt der Gas-Ausströmkanal 13 die obere Wandung 8.

Figur 1b bis 1d zeigen die weitere Befüllung des Gas-Sammelraums 7 mit Gas 1 und dadurch eine weitere Auffüllung des Gasvolumens 6 und ein weiteres Absinken des Pegels 5 der Flüssigkeit 2. Wie Fig. 1b zeigt, gelangt bei der Auffüllung des Gasvolumens 6 auch Gas 1 von oben durch den Gashebereinlass 16 in den Gasheberkanal 14, wodurch sich auch dieser von oben nach unten mit Gas 1 auffüllt.

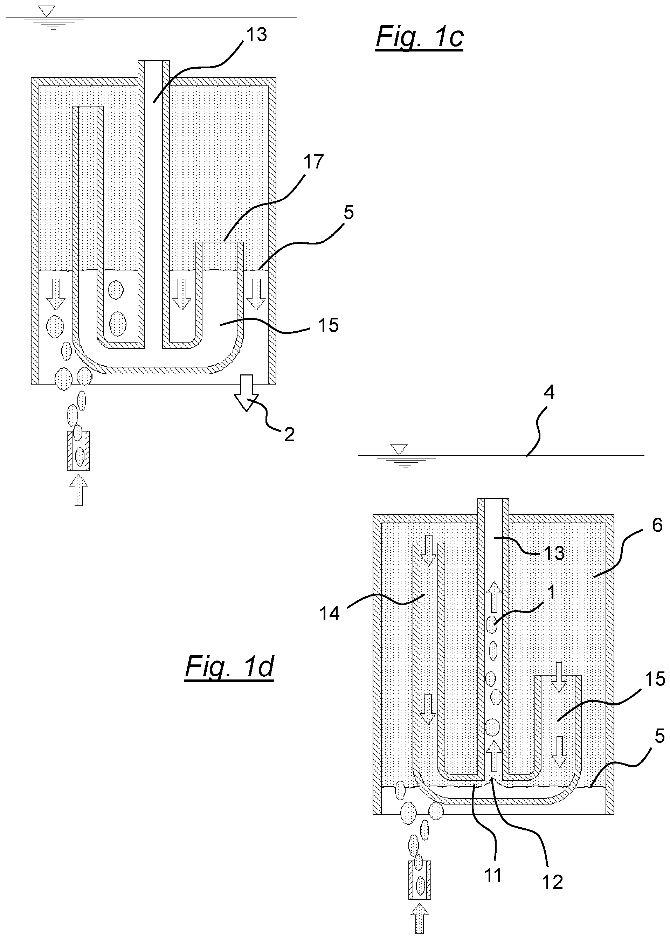

In Figur 1c hat der Pegel 5 den Kompensationseinlass 17 unterschritten und nun gelangt auch Gas 1 von oben in den Kompensationskanal 15. Während der in den Figuren 1a bis 1c dargestellten Verfahrens-Schritte bleibt der Gas-Ausströmkanal 13 mit Flüssigkeit 2 geflutet, d.h. es strömt kein Gas 1 aus der Begasungseinrichtung 3.

In Figur 1d hat der Pegel 5 der Flüssigkeit 2 den Einlassquerschnitt 12 unterschritten. Ab diesem Moment strömt das Gas 1 aus dem Gasvolumen 6 durch den Gasheberkanal 14 und den Kompensationskanal 15 nach unten zu dem Umlenkungsbereich 11 und dann in Folge nach oben durch den Einlassquerschnitt 12 und den sich an diesen anschließenden Gas-Ausströmkanal 13 zu der Oberfläche 4.

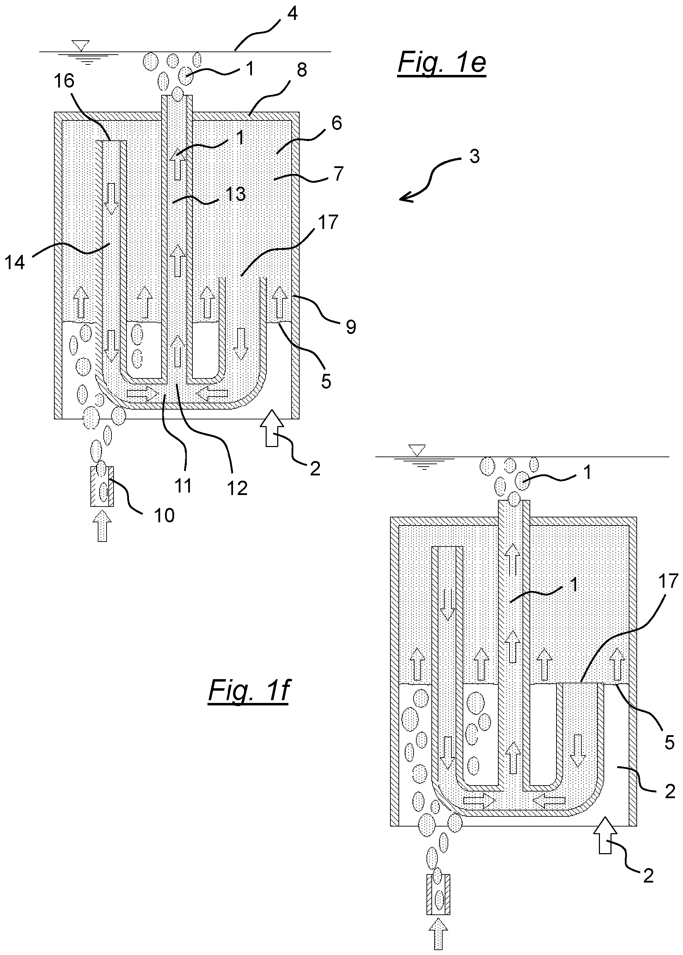

Figur 1e zeigt, wie sich durch das ausströmende Gas 1 das Gasvolumen 6 im Gas-Sammelraum 7 reduziert. Dabei wird das aus dem Gas-Sammelraum 7 ausströmende Gas 1 sukzessive durch von unten nachströmende Flüssigkeit 2 ersetzt, wodurch der Pegel 5 der Flüssigkeit 2 wieder ansteigt.

Das durch den Gas-Ausströmkanal 13 ausströmende Gas 1 erzeugt in dem Gas-Ausströmkanal 13, sowie in dem sich an diesen anschließenden Gasheberkanal 14 und in dem Kompensationskanal 15 eine Sogwirkung. Da sich zu diesem Zeitpunkt sowohl der Gashebereinlass 16 als auch der Kompensationseinlass 17 im mit Gas 1 gefüllten Gasvolumen 6 innerhalb des Gas-Sammelraums 7 befinden, strömt initiiert durch die erzeugte Sogwirkung zunächst allein das Gas 1 durch den Gas-Ausströmkanal 13.

Figur 1f zeigt den Moment, in dem der Pegel 5 der Flüssigkeit 2 den Kompensationseinlass 17 erreicht. Bis zu diesem Zeitpunkt ist nur Gas 1 durch den Gas-Ausströmkanal 13 geströmt.

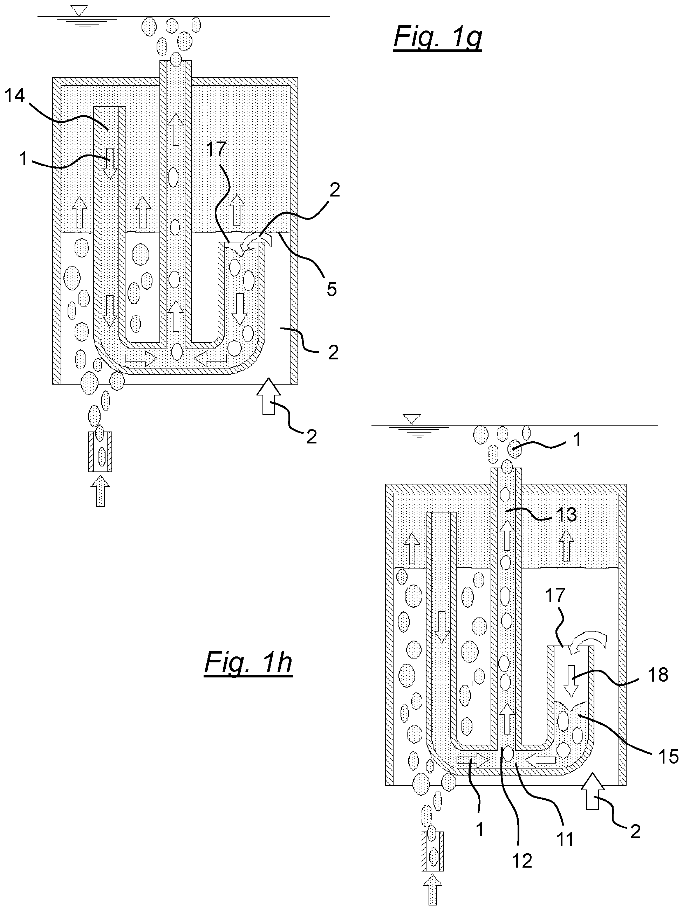

Figur 1g zeigt, wie beim weiteren Anstieg des Pegels 5 aufgrund des weiterhin durch den Gasheberkanal 14 ausströmenden Gases der Kompensationseinlass 17 mit Flüssigkeit 2 geflutet wird.

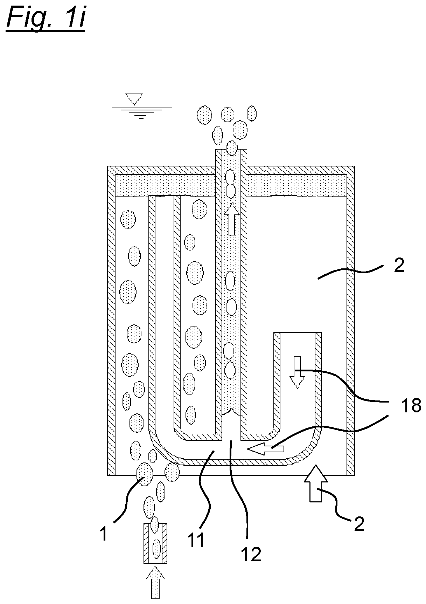

Figur 1h zeigt, wie durch den Saugeffekt des aus dem Gas-Ausströmkanals 13 ausströmenden Gases 1 ein Sperrstrom 18 der Flüssigkeit 2 durch den Kompensationseinlass 17 angesaugt wird und durch den Kompensationskanal 15 zu dem Einlassquerschnitt 12 strömt und dort von dem ausströmenden Gas 1 mitgerissen wird bis in Figur 1i der Sperrstrom 18 der Flüssigkeit 2 den Umlenkungsbereich 11 füllt und den Einlassquerschnitt 12 für das Gas 1 wie ein Ventil verschließt.

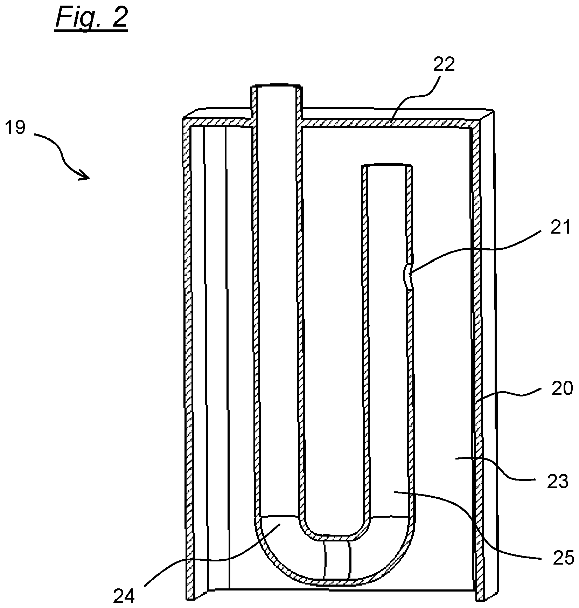

Figur 2 zeigt eine weitere erfindungsgemäße Begasungseinrichtung 19 mit einer seitlichen Wandung 20, die als Rechteckkanal mit einer Seitenlänge von 12 cm ausgebildet ist. Auch hier gibt es einen Kompensationseinlass 21, der ca. 6 cm unterhalb einer oberen Wandung 22 in einem Gas-Sammelraum 23 positioniert ist und sich gleichzeitig oberhalb eines Einlassquerschnittes 24 befindet. Der Kompensationseinlass 21 mündet in diesem Fall direkt in einen Gasheberkanal 25.

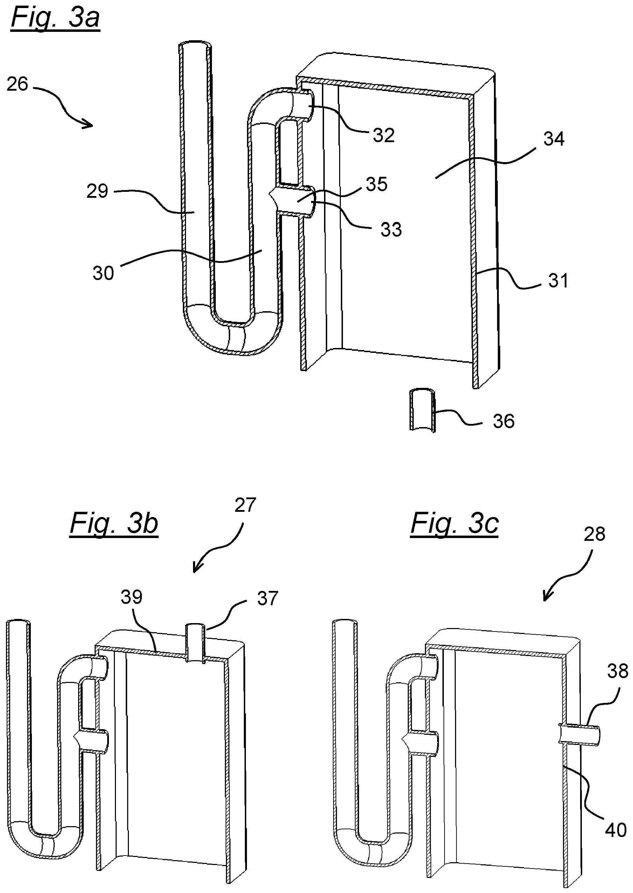

Die Figuren 3a bis 3c zeigen drei weitere erfindungsgemäße Begasungseinrichtungen 26, 27, 28, die in weiten Teilen identisch sind. In diesem Fall liegen sowohl ein Ausströmkanal 29 als auch ein Gasheberkanal 30 weitgehend außerhalb einer seitlichen Wandung 31, wobei ein Gashebereinlass 32 und ein Kompensationseinlass 33 erfindungsgemäß in einen Gas-Sammelraum 34 innerhalb der seitlichen Wandung 31 münden. Zudem schließt sich an den Kompensationseinlass 33 ein Kompensationskanal 35 an, der in den Gasheberkanal 30 mündet. In diesem Fall durchdringen der Gasheberkanal 30 und der Kompensationskanal 35 die seitliche Wandung 31.

Die Varianten 3a bis 3c unterscheiden sich lediglich durch die Positionierung eines Gaseinlasses 36, 37, 38. Bei der Variante 3a ist - wie auch bei der ersten erfindungsgemäßen Begasungseinrichtung 3 - der Gaseinlass 36 separiert unterhalb des Gas-Sammelraums 34 positioniert. In der Variante 3b durchdringt der Gaseinlass 37 eine obere Wandung 39 und in der Variante 3c durchdringt der Gaseinlass 38 eine seitliche Wandung 40. Die hier gezeigten unterschiedlichen Positionierungen des Gaseinlasses 36,37,38 sind bei allen erfindungsgemäßen Begasungseinrichtungen prinzipiell möglich. Diese werden in den meisten Darstellungen daher weggelassen.

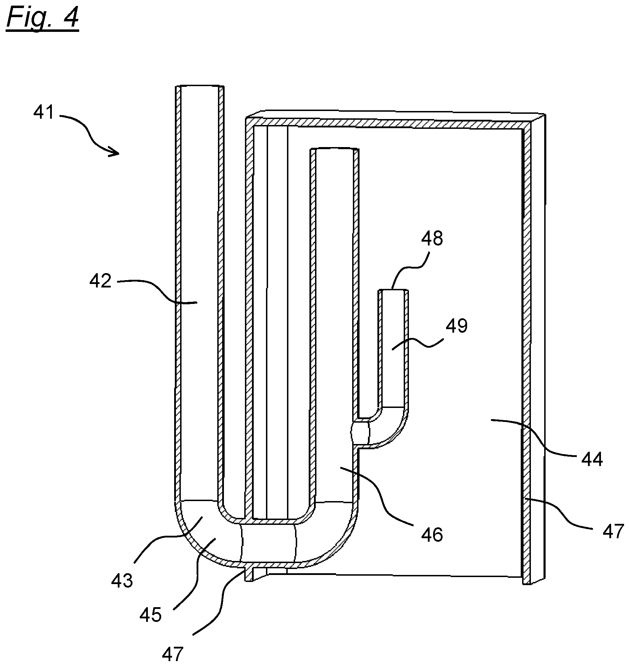

Figur 4 zeigt eine weitere erfindungsgemäße Begasungseinrichtung 41, bei der ein Ausströmkanal 42 und ein Einlassquerschnitt 43 komplett außerhalb eines Gas-Sammelraums 44 positioniert sind, wobei ein an einen Umlenkungsbereich 45 unten anschließender Gasheberkanal 46 innerhalb des Gas-Sammelraums 44 liegt und dabei eine seitliche Wandung 47 durchdringt.

Auch in der erfindungsgemäßen Begasungseinrichtung 41 schließt sich an einen Kompensationseinlass 48 ein Kompensationskanal 49 an, der in den Gasheberkanal 46 mündet und daher bis zum Einlassquerschnitt 43 durchströmbar ist. Der Kompensationskanal 49 ist in diesem Fall vertikal ausgedehnt und mündet weiter unten in den Gasheberkanal 46.

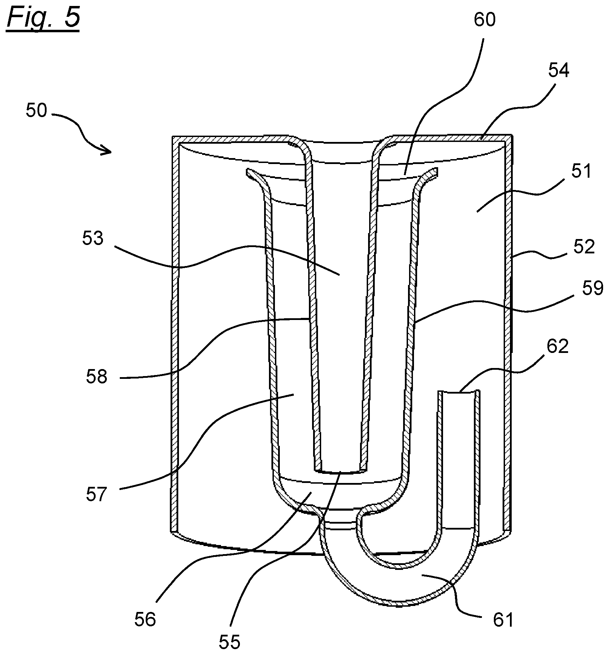

Figur 5 zeigt eine weitere erfindungsgemäße Begasungseinrichtung 50 im Schnitt. Hier wird ein Gas-Sammelraum 51 durch eine runde, rohrförmige seitliche Wandung 52 mit einem Durchmesser von etwa 17 cm begrenzt, in der zentrisch ein Gas-Ausströmkanal 53 positioniert ist, der eine obere Wandung 54 durchdringt. Der Gas-Ausströmkanal 53 weist unten einen Einlassquerschnitt 55 auf, an den sich unten ein Umlenkbereich 56 anschließt. In diesen mündet von oben ein Gasheberkanal 57, der in diesem Fall als Ringspalt ausgebildet zwischen einer äußeren Wand 58 des Gas-Ausströmkanals 53 und einer von unten über diesen gestülpten Glocke 59. Der Gasheberkanal 57 weist oben einen ringförmigen offenen Gashebereinlass 60 auf. Unten an der Glocke 59 schließt an den Umlenkbereich 56 ein Kompensationskanal 61 an, der mit einem Kompensationseinlass 62 im Gas-Sammelraum 51 mündet.

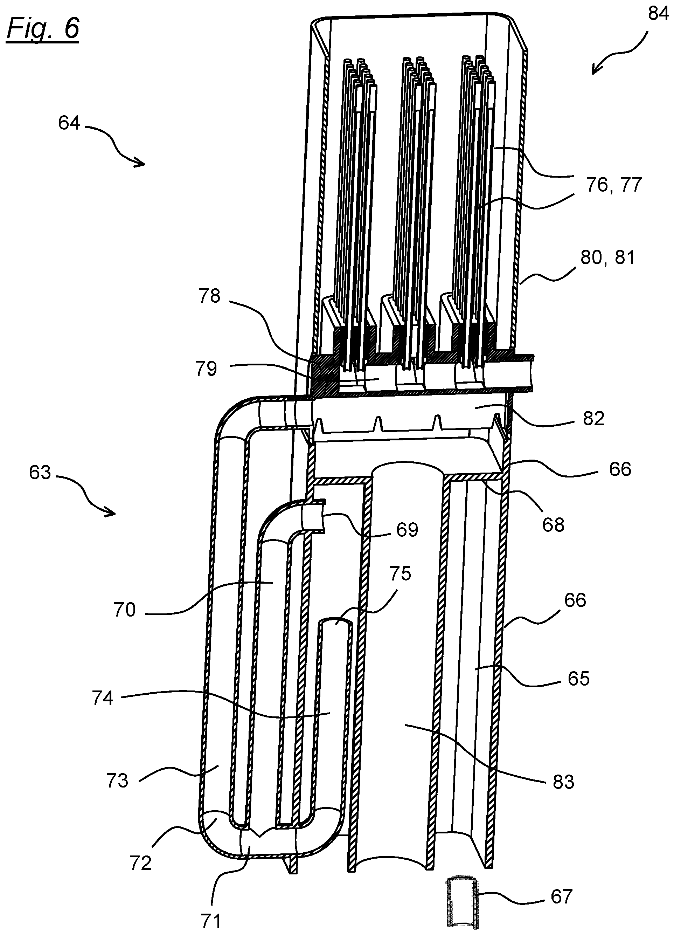

Figur 6 zeigt einen Schnitt durch eine weitere erfindungsgemäße Begasungseinrichtung 63, die unterhalb eines Membranfilters 64 montiert ist. Die Begasungseinrichtung 63 hat einen Gas-Sammelraum 65, der durch eine seitliche Wandung 66 in Form eines Rechteckrohres mit 20 cm Seitenbreite seitlich begrenzt wird. Der Gas-Sammelraum 65 ist nach unten offen mit einem darunter befindlichen Gaseinlass 67 zur Befüllung des Gas-Sammelraums 65 mit einem Gas im Betrieb. In den Gas-Sammelraum 65 mündet oben, unterhalb einer oberen Wandung 68 ein Gashebereinlass 69, an den sich ein Gasheberkanal 70 anschließt. Der Gasheberkanal 70 mündet unten in einen Umlenkungsbereich 71, an den sich oben ein Einlassquerschnitt 72 anschließt. Der Umlenkungsbereich 71 durchdringt unten die seitliche Wandung 66. An den Einlassquerschnitt 72 ist oben ein Gas-Ausströmkanal 73 angeschlossen. Zudem weist die Begasungseinrichtung 63 einen Kompensationskanal 74 auf, der innerhalb der seitlichen Wandung 66 liegt. Der Kompensationskanal 74 weist oben im Gas-Sammelraum 65 einen Kompensationseinlass 75 auf und mündet unten in den Umlenkungsbereich 71.

Der Membranfilter 64 weist Membranen 76 in Form von Hohlfasermembranen 77 auf, die unten in einem Fußelement 78 eingegossen sind. Das Fußelement 78 weist einen Permeat-Sammelraum 79 auf, an den die Hohlfasermembranen 77 lumenseitig offen angeschlossen sind zum Abzug eines Filtrates aus dem Lumen der Hohlfasermembranen 77. Die Hohlfasermembranen 77 sind oben einzeln verschlossen und werden von einem Gehäuse 80 seitlich umgeben, das als rechteckiges Rohr 81 mit gleichen Querschnittsabmessungen wie die seitliche Wandung 66 gestaltet ist und oben an die seitliche Wandung 66 anschließt. Unterhalb des Fußelementes 78 weist der Membranfilter 64 einen Gasverteiler 82 auf, in den der Gas-Ausströmkanal 73 mündet. Die Begasungseinrichtung 63 weist darüber hinaus einen Flüssigkeits-Strömungskanal 83 auf, der den Gassammelraum 65 und die obere Wandung 68 vertikal durchdringt, zum Einlassen einer Flüssigkeit unten in den Membranfilter 63.

Die Kombination aus Begasungseinrichtung 63 und Membranfilter 64 bildet gemeinsam eine Filtereinrichtung 84.

In den Figuren sind
- 1: Gas
- 2: Flüssigkeit
- 3: Begasungseinrichtung
- 4: Oberfläche
- 5: Pegel
- 6: Gasvolumen
- 7: Gas-Sammelraum
- 8: obere Wandung
- 9: seitliche Wandung
- 10: Gaseinlass
- 11: Umlenkungsbereich
- 12: Einlassquerschnitt
- 13: Gas-Ausströmkanal
- 14: Gasheberkanal
- 15: Kompensationskanal
- 16: Gashebereinlass
- 17: Kompensationseinlass
- 18: Sperrstrom
- 19: Begasungseinrichtung
- 20: seitliche Wandung
- 21: Kompensationseinlass
- 22: obere Wandung
- 23: Gas-Sammelraum
- 24: Einlassquerschnitt
- 25: Gasheberkanal
- 26: Begasungseinrichtung
- 27: Begasungseinrichtung
- 28: Begasungseinrichtung
- 29: Gas-Ausströmkanal
- 30: Gasheberkanal
- 31: seitliche Wandung
- 32: Gashebereinlass
- 33: Kompensationseinlass
- 34: Gas-Sammelraum
- 35: Kompensationskanal
- 36: Gaseinlass
- 37: Gaseinlass
- 38: Gaseinlass
- 39: obere Wandung
- 40: seitliche Wandung
- 41: Begasungseinrichtung
- 42: Gas-Ausströmkanal
- 43: Einlassquerschnitt
- 44: Gas-Sammelraum
- 45: Umlenkungsbereich
- 46: Gasheberkanal
- 47: seitliche Wandung
- 48: Kompensationseinlass
- 49: Kompensationskanal
- 50: Begasungseinrichtung
- 51: Gas-Sammelraum
- 52: seitliche Wandung
- 53: Gas-Ausströmkanal
- 54: obere Wandung
- 55: Einlassquerschnitt
- 56: Umlenkungsbereich
- 57: Gasheberkanal
- 58: äußere Wand
- 59: Glocke
- 60: Gashebereinlass
- 61: Kompensationskanal
- 62: Kompensationseinlass
- 63: Begasungseinrichtung
- 64: Membranfilter
- 65: Gas-Sammelraum
- 66: seitliche Wandung
- 67: Gaseinlass
- 68: obere Wandung
- 69: Gashebereinlass
- 70: Gasheberkanal
- 71: Umlenkungsbereich
- 72: Einlassquerschnitt
- 73: Gas-Ausströmkanal
- 74: Kompensationskanal
- 75: Kompensationseinlass
- 76: Membranen
- 77: Hohlfasermembranen
- 78: Fußelement
- 79: Permeat-Sammelraum
- 80: Gehäuse
- 81: Rohr
- 82: Gasverteiler
- 83: Flüssigkeits-Strömungskanal
- 84: Filtereinrichtung

## Patentansprüche

1. Verfahren zum Einleiten eines Gases (1) in eine Flüssigkeit (2), wobei in aufeinanderfolgenden Pulsen jeweils
• zunächst ein unterhalb einer Oberfläche (4) der Flüssigkeit (2) angeordnetes und nach unten durch einen Pegel (5) der Flüssigkeit (2) begrenztes Gasvolumen (6) mit dem Gas (1) aufgefüllt wird, wobei das Gas (1) zugleich die Flüssigkeit (2) von oben nach unten aus einem Gasheberkanal (14, 25, 30, 46, 57, 70) verdrängt, bis der Pegel (5) einen Einlassquerschnitt (12, 24, 43, 55, 72) eines Gas-Ausströmkanals (13, 29, 42, 53, 73) unterschreitet,
• dann das Gas (1) aus dem Gasvolumen (6) in Folge nach unten durch den Gasheberkanal (14, 25, 30, 46, 57, 70), einen sich an diesen unten anschließenden Umlenkungsbereich (11, 45, 56, 71), nach oben durch den Einlassquerschnitt (12, 24, 43, 55, 72) und den sich an diesen oben anschließenden Gas-Ausströmkanal (13, 29, 42, 53, 73) zu der Oberfläche (4) strömt, wobei ein Sperrstrom (18) der Flüssigkeit durch einen Kompensationseinlass (17, 21, 33, 48, 62, 75) unterhalb eines Gashebereinlasses (16, 32, 60, 69) zu dem Einlassquerschnitt (12, 24, 43, 55, 72) strömt und von dem Gas (1) solange mitgerissen wird bis die Flüssigkeit (2) den Umlenkungsbereich (11, 45, 56, 71) füllt und dadurch den Einlassquerschnitt (12, 24, 43, 55, 72) für das Gas (1) verschließt,
***dadurch gekennzeichnet, dass***
• nachdem der Pegel (5) den Einlassquerschnitt (12, 24, 43, 55, 72) unterschritten hat, zunächst allein das Gas (1) durch den Gas-Ausströmkanal (13, 29, 42, 53, 73) strömt, bis der Pegel (5) den Kompensationseinlass (17, 21, 33, 48, 62, 75) übersteigt, und
• erst dann der Sperrstrom (18) durch den Kompensationseinlass (17, 21, 33, 48, 62, 75) zu dem Einlassquerschnitt (12, 24, 43, 55, 72) strömt.

2. Verfahren zur Filtration einer Flüssigkeit (2) in einem in die Flüssigkeit (2) getauchten Membranfilter (64) mit Membranen (76), wobei zum Reinigen der Membranen (76) das Gas (1) unten in den Membranfilter (64) eingeleitet wird, ***dadurch gekennzeichnet, dass*** das Gas (1) gemäß dem vorgenannten Verfahren den Gas-Ausströmkanal (13, 29, 42, 53, 73) durchströmt und danach in den Membranfilter (64) eingeleitet wird.

3. Begasungseinrichtung (3,19, 26, 27, 28, 41, 50, 63) mit
• einem nach unten offenen Gas-Sammelraum (7, 23, 34, 44, 51, 65), der durch eine obere Wandung (8, 22, 39, 54, 68) und eine seitliche Wandung (9, 20, 40, 47, 52, 66) begrenzt wird,
• einem Gaseinlass (10, 36, 37, 38, 67) zum Einlassen eines Gases (1) in den Gas-Sammelraum (7, 23, 34, 44, 51, 65),
• einem Gasheberkanal (14, 25, 30, 46, 57, 70) zum Leerhebern des Gas-Sammelraumes (7, 23, 34, 44, 51, 65), der oben einen Gashebereinlass (16, 32, 60, 69) im Gas-Sammelraum (7, 23, 34, 44, 51, 65) aufweist,
• einem Umlenkungsbereich (11, 45, 56, 71) unten an dem Gasheberkanal (14, 25, 30, 46, 57, 70),
• einem Einlassquerschnitt (12, 24, 43, 55, 72) oben an dem Umlenkungsbereich (11, 45, 56, 71), an den oben ein Gas-Ausströmkanal (13, 29, 42, 53, 73) anschließt und
• einem Kompensationseinlass (17, 21, 33, 48, 62, 75) unterhalb des Gashebereinlasses (16, 32, 60, 69), der bis zum Einlassquerschnitt (12, 24, 43, 55, 72) durchströmbar ist
***dadurch gekennzeichnet, dass***
der Kompensationseinlass (17, 21, 33, 48, 62, 75) auf Höhe des Einlassquerschnittes (12, 24, 43, 55, 72) oder darüber liegt.

4. Begasungseinrichtung (3,19, 26, 27, 28, 41, 50, 63) nach Anspruch 3 ***dadurch gekennzeichnet, dass*** der Kompensationseinlass (17, 21, 33, 48, 62, 75) an dem Gasheberkanal (14, 25, 30, 46, 57, 70) ausgebildet ist.

5. Begasungseinrichtung (3,19, 26, 27, 28, 41, 50, 63) nach Anspruch 3 ***gekennzeichnet durch*** einen Kompensationskanal (15, 35, 49, 61, 74), der sich an den Kompensationseinlass (17, 21, 33, 48, 62, 75) in Richtung Umlenkungsbereich (11, 45, 56, 71) anschließt.

6. Begasungseinrichtung (3,19, 26, 27, 28, 41, 50, 63) nach Anspruch 5 , ***dadurch gekennzeichnet, dass*** der Kompensationskanal (15, 35, 49, 61, 74) in den Gasheberkanal (14, 25, 30, 46, 57, 70) mündet.

7. Begasungseinrichtung (3,19, 26, 27, 28, 41, 50, 63) nach Anspruch 5 , ***dadurch gekennzeichnet, dass*** der Kompensationskanal (15, 35, 49, 61, 74) parallel zum Gasheberkanal (14, 25, 30, 46, 57, 70) in den Umlenkungsbereich (11, 45, 56, 71) mündet.

8. Begasungseinrichtung (3,19, 26, 27, 28, 41, 50, 63) nach einem der Ansprüche 5 bis 7, ***dadurch gekennzeichnet, dass*** ein Querschnitt des Kompensationseinlasses (17, 21, 33, 48, 62, 75) größer ist als ein minimaler Querschnitt des Kompensationskanals (15, 35, 49, 61, 74).

9. Filtereinrichtung (84), die einen Membranfilter (64) zur Filtration einer Flüssigkeit (2) mit Membranen (76) und eine unterhalb der Membranen (76) angeordnete Begasungseinrichtung (3,19, 26, 27, 28, 41, 50, 63) zum Einleiten eines Gases (1) aufweist, ***dadurch gekennzeichnet, dass*** die Begasungseinrichtung (3,19, 26, 27, 28, 41, 50, 63) gemäß einem der Ansprüche 3 bis 8 ausgestaltet ist.

10. Filtereinrichtung (84) nach Anspruch 9, ***gekennzeichnet durch*** ein Gehäuse (80), das die Membranen (76) seitlich umgibt und das oben an die Begasungseinrichtung (3,19, 26, 27, 28, 41, 50, 63) anschließt, wobei die Begasungseinrichtung (3,19, 26, 27, 28, 41, 50, 63) einen Flüssigkeits-Strömungskanal (83) aufweist, der den Gassammelraum (7, 23, 34, 44, 51, 65) vertikal durchdringt, zum Einlassen der Flüssigkeit (2) unten in den Membranfilter (64).

11. Filtereinrichtung (84) nach Anspruch 10, ***dadurch gekennzeichnet, dass*** das Gehäuse (80) ein durchgehendes Rohr (81) ist.

12. Filtereinrichtung (84) nach einem der Ansprüche 9 bis 11, ***gekennzeichnet durch*** einen Gasverteiler (82) unterhalb der Membranen (76), in den der Gas-Ausströmkanal (13, 29, 42, 53, 73) mündet.

## Claims

1. A method for introducing a gas (1) into a liquid (2), the method comprising:
filling a gas volume (6) arranged below a surface (4) of the liquid (2) and defined in a downward direction by a level (5) of the liquid (2) with the gas (1) in sequential pulses wherein the gas (1) simultaneously displaces the liquid (2) from a top down from a gas lifting channel (14, 25, 30, 46, 57, 70) until the level (5) drops below an inlet cross section (12, 24, 43, 55, 72) of a gas flow out channel (13, 29, 42, 53, 73); subsequently
flowing the gas (1) out of the gas volume (6) downward through the gas lifting channel (14, 25, 30, 46, 57, 70), a deflection portion (11, 45, 56, 71) adjoining at a bottom of the gas lifting channel, in upward direction through the inlet cross section (12, 24, 43, 55, 72) and through a gas flow out channel (13, 29, 42, 53, 73) adjoining the inlet cross section (12, 24, 43, 55, 72) at a top to the surface (4), wherein a blocking flow (18) of the liquid flows through a compensation inlet (17, 21, 33, 48, 62, 75) below the gas lifting inlet (16, 32, 60, 69) to the inlet cross section (12, 24, 43, 55, 72) and is pulled along by the gas (1) until the liquid (2) fills the deflection portion (11, 45, 56, 71) and thereby closes the inlet cross section (12, 24, 43, 55, 72) for the gas (1) ;
**characterized in that**
the gas (1) initially only flows through the gas outlet channel (13, 29, 42, 53, 73) after the level (5) has dropped below the inlet cross section (12, 24, 43, 55, 72) until the level (5) rises above the compensation inlet (17, 21, 33, 48, 62, 75), and
only then the blocking flow (18) runs through the compensation inlet (17, 21, 33, 48, 62, 75) to the inlet cross section (12, 24, 43, 55, 72).

2. A method for filtering a liquid (2) in a membrane filter (64) submerged in the liquid (2), the membrane filter including membranes (76), wherein a gas (1) is introduced into the membrane filter (64) from below to clean the membranes (76),
**characterized in that** the gas (1) flows through the gas flow out channel (13, 29, 42, 53, 73) according to the method according to claim 1 and is subsequently introduced into the membrane filter (64).

3. A gas introduction device (3.19, 26, 27, 28, 41, 50, 63), comprising:
- a downward open gas collection cavity (7, 23, 34, 44, 51, 65), defined by an upper wall (8, 22, 39, 54, 68) and a lateral wall (9, 20, 40, 47, 52, 66);
- a gas inlet (10, 36, 37, 38, 67) configured to let a gas (1) into the gas collection cavity (7, 23, 34, 44, 51, 65);
- a gas lifting channel (14, 25, 30, 46, 57, 70) configured to lift the gas out of the gas collection cavity (7, 23, 34, 44, 51, 65) and empty the gas collection cavity (7, 23, 34, 44, 51, 65), wherein the gas lifting channel (14, 25, 30, 46, 57, 70) includes a gas lifting inlet (16, 32, 60, 69) in a top of the gas collection cavity (7, 23, 34, 44, 51, 65);
- a deflection portion (11, 45, 56, 71) at a bottom of the gas lifting channel (14, 25, 30, 46, 57, 70);
- an inlet cross section (12, 24, 43, 55, 72) arranged on top at the deflection portion (11, 45, 56, 71), wherein a gas outlet channel (13, 29, 42, 53, 73) adjoins at a top of the deflection portion; and
- a compensation inlet (17, 21, 33, 48, 62, 75) arranged below the gas lifting inlet (16, 32, 60, 69) and flowable to the inlet cross section (12, 24, 43, 55, 72),
**characterized in that**
the compensation inlet (17, 21, 33, 48, 62, 75) is arranged at a level of the Inlet cross section (12, 24, 43, 55, 72) or above.

4. The gas introduction device (3, 19, 26, 27, 28, 41, 50, 63) according to claim 3, **characterized in that** the compensation inlet (17, 21, 33, 48, 62, 75) is configured at the gas lifting channel (14, 25, 30, 46, 57, 70).

5. The gas introduction device (3, 19, 26, 27, 28, 41, 50, 63) according to claim 3, **characterized by** a compensation channel (15, 35, 49, 61, 74) that adjoins the compensation inlet (17, 21, 33, 48, 62, 75) in a direction towards the deflection portion (11, 45, 56, 71).

6. The gas introduction device (3, 19, 26, 27, 28, 41, 50, 63) according to claim 5, **characterized in that** the compensation channel (15, 35, 49, 61, 74) leads into the gas lifting channel (14, 25, 30, 46, 57, 70).

7. The gas introduction device (3, 19, 26, 27, 28, 41, 50, 63) according to claim 5, **characterized in that** the compensation channel (15, 35, 49, 61, 74) leads into the deflection portion (11, 45, 56, 71) parallel to the gas lifting channel (14, 25, 30, 46, 57, 70).

8. The gas introduction device (3, 19, 26, 27, 28, 41, 50, 63) according to one of claims 5 to 7, **characterized in that** a cross section of the compensation inlet (17, 21, 33, 48, 62, 75) is greater than a minimum cross section of the compensation channel (15, 35, 49, 61, 74).

9. A filter device (84), comprising: a membrane filter (64) configured to filter a liquid (2) and including membranes (76) and a gas introduction device (3, 19, 26, 27, 28, 41, 50, 63) arranged below the membranes (76) and configured to introduce a gas (1), **characterized in that** the gas introduction device (3,19, 26, 27, 28, 41, 50, 63) is configured according to one of claims 3 to 8.

10. The filter device (84) according to claim 9, **characterized by** a housing (80) that laterally envelops the membranes (76) and adjoins the gas introduction device (3.19, 26, 27, 28, 41, 50, 63) on top, wherein the gas introduction device (3, 19, 26, 27, 28, 41, 50, 63) includes a liquid flow channel (83) that vertically penetrates the gas collection cavity (7, 23, 34, 44, 51, 65) and that is configured to let the liquid (2) flow into the membrane filter (64) at a bottom of the membrane filter..

11. The filter device (84) according to claim 10, **characterized in that** the housing (80) is a configured as a continuous tube (81).

12. The filter device (84) according to one of claims 9 to 11, **characterized by** a gas distributor (82) arranged below the membranes (76), wherein the gas outlet channel (13, 29, 42, 53, 73) leads into the gas distributor (82).

## Revendications

1. Procédé d'introduction d'un gaz (1) dans un liquide (2), sachant que par impulsions successives
• un volume de gaz (6) disposé en dessous d'une surface (4) du liquide (2) et limité vers le bas par un niveau (5) de liquide (2) est d'abord respectivement rempli avec le gaz (1), sachant que le gaz (1) repousse simultanément le liquide (2) du haut vers le bas depuis un conduit de siphonnage de gaz (14, 25, 30, 46, 57, 70) jusqu'à ce que le niveau (5) dépasse une section d'admission (12, 24, 43, 55, 72) d'un conduit d'écoulement de gaz (13, 29, 42, 53, 73),
• puis le gaz (1) s'écoule ensuite du volume de gaz (6) vers le bas à travers le conduit de siphonnage de gaz (14, 25, 30, 46, 57, 70), une zone de renvoi (11, 45, 56, 71) se raccordant en bas à celui-ci, vers le haut à travers la section d'admission (12, 24, 43, 55, 72) et le conduit d'écoulement de gaz (13, 29, 42, 53, 73) se raccordant en haut à celle-ci vers la surface (4), sachant qu'un courant inverse (18) du liquide s'écoule à travers une admission de compensation (17, 21, 33, 48, 62, 75) en dessous d'une admission de siphonnage de gaz (16, 32, 60, 69) vers la section d'admission (12, 24, 43, 55, 72) et du gaz (1) est entraîné de celle-ci jusqu'à ce que le liquide (2) remplisse la zone de renvoi (11, 45, 56, 71) et ferme ainsi la section d'admission (12, 24, 43, 55, 72) pour le gaz (1),
**caractérisé en ce qu'**,
• une fois que le niveau (5) est descendu sous la section d'admission (12, 24, 43, 55, 72), le gaz (1) s'écoule d'abord seul à travers le conduit d'écoulement de gaz (13, 29, 42, 53, 73) jusqu'à ce que le niveau (5) dépasse l'admission de compensation (17, 21, 33, 48, 62, 75), et
• seulement ensuite le courant inverse (18) s'écoule à travers l'admission de compensation (17, 21, 33, 48, 62, 75) vers la section d'admission (12, 24, 43, 55, 72).

2. Procédé de filtrage d'un liquide (2) dans un filtre à membranes (64) plongé dans le liquide (2) avec des membranes (76), sachant que pour nettoyer les membranes (76), le gaz (1) est introduit en bas dans le filtre à membranes (64), **caractérisé en ce que** le gaz (1) traverse le conduit d'écoulement de gaz (13, 29, 42, 53, 73) selon le procédé précité et est introduit ensuite dans le filtre à membranes (64).

3. Dispositif de gazéification (3, 19, 26, 27, 28, 41, 50, 63) avec
• un compartiment de collecte de gaz ouvert vers le bas (7, 23, 34, 44, 51, 65), qui est limité par une paroi supérieure (8, 22, 39, 54, 68) et une paroi latérale (9, 20, 40, 47, 52, 66),
• une admission de gaz (10, 36, 37, 38, 67) pour introduire un gaz (1) dans le compartiment de collecte de gaz (7, 23, 34, 44, 51, 65),
• un conduit de siphonnage de gaz (14, 25, 30, 46, 57, 70) pour le siphonnage du compartiment de collecte de gaz (7, 23, 34, 44, 51, 65), qui comporte en haut une admission de siphonnage de gaz (16, 32, 60, 69) dans le compartiment de collecte de gaz (7, 23, 34, 44, 51, 65),
• une zone de renvoi (11, 45, 56, 71) en bas sur le conduit de siphonnage de gaz (14, 25, 30, 46, 57, 70),
• une section d'admission (12, 24, 43, 55, 72) en haut sur la zone de renvoi (11, 45, 56, 71) à laquelle se raccorde en haut un conduit d'écoulement de gaz (13, 29, 42, 53, 73), et
• une admission de compensation (17, 21, 33, 48, 62, 75) en dessous de l'admission de siphonnage de gaz (16, 32, 60, 69), qui peut être traversée jusqu'à la section d'admission (12, 24, 43, 55, 72),
**caractérisé en ce que**
l'admission de compensation (17, 21, 33, 48, 62, 75) se situe à la hauteur de la section d'admission (12, 24, 43, 55, 72) ou au-dessus.

4. Dispositif de gazéification (3, 19, 26, 27, 28, 41, 50, 63) selon la revendication 3, **caractérisé en ce que** l'admission de compensation (17, 21, 33, 48, 62, 75) est constituée sur le conduit de siphonnage de gaz (14, 25, 30, 46, 57, 70) .

5. Dispositif de gazéification (3, 19, 26, 27, 28, 41, 50, 63) selon la revendication 3, **caractérisé par** un conduit de compensation (15, 35, 49, 61, 74), qui se raccorde à l'admission de compensation (17, 21, 33, 48, 62, 75) en direction de la zone de renvoi (11, 45, 56, 71).

6. Dispositif de gazéification (3, 19, 26, 27, 28, 41, 50, 63) selon la revendication 5, **caractérisé en ce que** le conduit de compensation (15, 35, 49, 61, 74) débouche dans le conduit de siphonnage de gaz (14, 25, 30, 46, 57, 70) .

7. Dispositif de gazéification (3, 19, 26, 27, 28, 41, 50, 63) selon la revendication 5, **caractérisé en ce que** le conduit de compensation (15, 35, 49, 61, 74) débouche parallèlement au conduit de siphonnage de gaz (14, 25, 30, 46, 57, 70) dans la zone de renvoi (11, 45, 56, 71) .

8. Dispositif de gazéification (3, 19, 26, 27, 28, 41, 50, 63) selon l'une quelconque des revendications 5 à 7, **caractérisé en ce qu'**une section de l'admission de compensation (17, 21, 33, 48, 62, 75) est plus grande qu'une section minimale du conduit de compensation (15, 35, 49, 61, 74).

9. Dispositif de filtrage (84), qui comporte un filtre à membranes (64) pour le filtrage d'un liquide (2) avec des membranes (76) et un dispositif de gazéification (3, 19, 26, 27, 28, 41, 50, 63) disposé en dessous des membranes (76) pour introduire un gaz (1), **caractérisé en ce que** le dispositif de gazéification (3, 19, 26, 27, 28, 41, 50, 63) est configuré selon l'une quelconque des revendications 3 à 8.

10. Dispositif de filtrage (84) selon la revendication 9, **caractérisé par** un boîtier (80), qui entoure latéralement les membranes (76) et qui se raccorde en haut au dispositif de gazéification (3, 19, 26, 27, 28, 41, 50, 63), sachant que le dispositif de gazéification (3, 19, 26, 27, 28, 41, 50, 63) comporte un conduit d'écoulement de liquide (83), qui traverse verticalement le compartiment de collecte de gaz (7, 23, 34, 44, 51, 65) pour introduire le liquide (2) en dessous dans le filtre à membranes (64).

11. Dispositif de filtrage (84) selon la revendication 10, **caractérisé en ce que** le boîtier (80) est un tube traversant (81).

12. Dispositif de filtrage (84) selon l'une quelconque des revendications 9 à 11, **caractérisé en ce qu'**un distributeur de gaz (82) sous les membranes (76) débouche dans le conduit d'écoulement de gaz (13, 29, 42, 53, 73).
